# EUROPEAN PATENT APPLICATION

(11) **EP 1 388 780 A1**
(43) Date of publication of application: **11.02.2004**
(21) Application number: 02780019.2
(22) Date of filing: 06.11.2002
(51) Int. Cl.: G06F 3/03, G06F 13/00

(54) **DATA COMMUNICATION CONTROL SYSTEM, DATA COMMUNICATION CONTROL SERVER, INFORMATION INPUT APPARATUS, DATA COMMUNICATION CONTROL PROGRAM, INPUT APPARATUS CONTROL PROGRAM, AND TERMINAL DEVICE CONTROL PROGRAM**

(30) Priority: 06.11.2001 JP 2001340745
(71) Applicant: SEIKO EPSON CORPORATION, Shinjuku-ku, Tokyo 163-0811 (JP)
(72) Inventor: MIYAKOSHI, Daisuke, c/o Seiko Epson Corporation, Suwa-shi, Nagano 392-8502 (JP); KOYAMA, Fumio, c/o Seiko Epson Corporation, Suwa-shi, Nagano 392-8502 (JP); YAMAKADO, Hitoshi, c/o Seiko Epson Corporation, Suwa-shi, Nagano 392-8502 (JP); MIYAMOTO, Toru, c/o Seiko Epson Corporation, Suwa-shi, Nagano 392-8502 (JP)
(74) Representative: Hoffmann, Eckart, Dipl.-Ing.
(86) International application number: PCT/JP2002/011569
(87) International publication number: WO 2003/040904

(57) **Abstract**

To provide a data communications control system suitable for communicating data between information terminals equipped with an information input device as well as to provide a data communications control server, information input device, data communications control program, input device control program, and terminals control program for the system.

A pen-type information input device 2 according to the present invention includes an acquisition request transmitting unit 2a, related-data storage unit 2b, data transmission request generating unit 2c, data transmission request transmitting unit 2d, sound producing unit 2e, light emitting unit 2f, and first wireless sending/receiving unit 2g. This makes it possible to send and receive data handily between the information terminals by touching display units of information terminals with the pen tip of pen-type information input device 2.

## Description

### Technical Field

The present invention relates to a data communications control system capable of controlling data communications among a plurality of information terminals using an information input device, as well as to a data communications control server, information input device, data communications control program, input device control program, and terminals control program for the system.

### Background Art

One of the conventional methods for data communications between information terminals equipped with information input devices involves the use of infrared communications in which signal waves have directivity. This method has the advantage of enabling communications with a specific communication partner in a simple manner with an infrared transmitter directed to an infrared receiver of the communication partner.

Another method involves the use of radio waves for data communications between information terminals. The use of radio waves provides the advantages of being able to increase communication speed as well as to communicate data even if there is an obstruction.

Still another method involves recording data in a removable memory device, mounting the memory device in an information terminal at the destination to transfer the data. This method has the advantage of eliminating the need to provide the information terminal with communications capabilities.

However, the infrared communications, which have a lower communication speed than the method which uses radio waves or the like, have the problem of not being suitable for moving large volumes of data.

Also, the data communications using radio waves have the problem of being inconvenient because of the need to register IDs unique to communication partners in the information terminals in advance to identify the communication partners.

Also, the method which uses a memory device has the problem of not being suitable for moving large volumes of data because memory capacity is limited, particularly by costs.

The present invention has been made in view of these unsolved problems with the prior art technologies. Its obj ect is to provide a data communications control system suitable for communicating data between information terminals equipped with an information input device as well as to provide a data communications control server, information input device, data communications control program, input device control program, and terminals control program for the system.

### Disclosure of the Invention

The present invention provides a data communications control system which comprises an information input device and two or more information terminals and controls data communications between the information terminals according to input information from the information input device, characterized in that:
the information terminals and a data communications control server which controls data communications are connected in such a way that they can communicate with each other;
the information terminals comprise data storage means for storing predetermined data, information display means for displaying information corresponding to stored-data stored by the data storage means on a display unit, touch position sensing means for sensing any position on the display unit that is touched with a part of the information input device, related-data transmitting means for transmitting, to the information input device, related data associated with displayed information at the touch position in response to a related-data acquisition request from the information input device, stored-data transmitting means for transmitting stored-data corresponding to the displayed information at the touch position to the data communications control server, and transmission request notifying means for notifying the data communications control server of a data transmission request acquired from the information input device;
the information input device comprises acquisition request transmitting means for transmitting a related-data acquisition request to the information terminal touched with the part of the information input device, related-data storage means for storing the related data, data transmission request generating means for generating a data transmission request based on the related data, and data transmission request transmitting means for transmitting the generated data transmission request to the information terminal touched with the part of the information input device; and
the data communications control server comprises transmit data storage means for storing the stored-data transmitted by the stored-data transmitting means, and data transmission means for transmitting, to the information terminal which is a notifying party, memory contents of the transmit data storage means based on a notification from the transmission request notifying means.

With this configuration, when information corresponding to the data stored in the data storage means and displayed on the display unit by the information display means of the information terminal is touched with the part of the information input device on the display unit and the acquisition request transmitting means of the information input device transmits an acquisition request to the information terminal, the information terminal causes the touch position sensing means to sense the position touched with the part of the information input device, transmits related data associated with data which corresponds to the information located at the sensed position to the information input device, stores the data itself in the transmit data storage means of the data communications control server. When the display unit of the information terminal is touched with the part of the information input device anda data transmission request is transmitted to the information terminal by the data transmission request transmitting means, the transmission request notifying means transmits the data transmission request to the data communications control server. Furthermore, when a notification about the data transmission request is delivered, the data transmission means can transmit the data stored in the transmit data storage means to the information terminal at the destination.

In short, the data corresponding to the displayed information touched with the part of the information input device on the display unit of a first information terminal can be transmitted to a second information terminal by touching the display unit of the second information terminal with the part of the information input device. This is convenient because data can be communicated handily between information terminals.

Incidentally, the data communications control system according to the present invention is not limited to an intranet-based configuration, and it can be applied to a configuration in which the data communications control server is installed on the Internet. Furthermore, the information terminals include not only terminals such as PCs (Personal Computers), notebook PCs, and PDAs (Personal Digital Assistants), but also dedicated devices.

Also, if the volume of the stored-data corresponding to the related-data acquisition request is not larger than a predetermined volume, the information terminal transmits the stored-data directly to the information input device; and
the information input device transmits the acquired stored-data directly to the information terminal at the destination, bypassing the data communications control server.

In this way, if the volume of the data corresponding to the related-data acquisition request is not larger than a predetermined volume, the information terminal transmits the stored-data itself directly to the information input device and the information input device transmits the stored-data directly to the information terminal at the destination, bypassing the data communications control server.

This is convenient because small volumes of data can be communicated between information terminals quickly. On the other hand, since data in excess of a predetermined volume is transmitted via the data communications control server, large volumes of data can be transmitted handily.

Also, the related-data transmitting means transmits, as the related data, storage location data which indicates a storage location of the stored-data corresponding to the displayed information.

That is, since the related-data transmitting means transmits, as the related data, location information which indicates what information terminal stores the data corresponding to the acquisition request and in what storage means, the location information can be included in the data transmission request transmitted by the data transmission request transmitting means and consequently the data communications control server can know the location of the data easily from the location information. This is convenient when transmitting the data to the information terminal.

Also, the related-data transmitting means transmits, as the related data, a data retrieval key for use to move or copy the stored-data corresponding to the displayed information;
the data transmission request generating means generates a data transmission request which contains the data retrieval key; and
the data communications control system comprises retrieval key judging means for judging whether the data retrieval key is correct when the data transmission request containing the data retrieval key is received, and transmits the data corresponding to the data transmission request to the information terminal if it is judged that the data retrieval key is correct.

In this way, related data corresponding to a related-data acquisition request contains a data retrieval key for use to move or copy the stored-data, the data transmission request generating means generates a data transmission request which contains the data retrieval key, and the data transmission request is transmitted. The retrieval key judging means judges whether the data retrieval key acquired is correct, and the data corresponding to the data transmission request is transmitted to the information terminal if it is judged that the data retrieval key is correct.

Thus, the data retrieval key can, for example, be such data that permits data exchange between information terminals. Then, by enabling sending and receiving of data only among the information terminals which possess this data, it is possible to place restrictions on information terminals individually. Security can be increased if restrictions are set on the sending and receiving of important data.

Also, a security level is assigned to each stored-data item in the data storage means;
the information terminal transmits stored-data with a high security level directly to the information input device; and
the information input device transmits the acquired data with the high security level directly to the information terminal at the destination, bypassing the data communications control server.

In this way, when the security level of the data corresponding to a related-data acquisition request is high, the information terminal transmits the data directly to the information input device, which then transmits the data directly to the information terminal at the destination, bypassing the data communications control server.

Thus, when the data communications control server is installed, for example, on the Internet, data with a high security level is moved by being stored directly in the information input device. This makes it possible to transmit data securely, preventing data leaks and the like.

Also, the information input device has unique identification information; and
the data communications control server has a storage space of a predetermined capacity for each piece of the identification information registered with the server and holds the transmitted stored-data in the storage space.

In this way, the information input device is assigned unique identification information, the identification information is registered with the data communications control server, and a storage space of a predetermined capacity is provided for each piece of the identification information. Then, transmitted data is stored and held in the storage space.

This means that the data is backed up, which is convenient because the data can be moved and processed assuredly.

Also, the information input device comprises sound producing means for making current state known by sound when data is sent or received by touching the display unit with the part of the information input device.

In this way, when data is sent or received by touching the display unit of the information terminal with the part of the information input device, the information input device makes the sound producing means output a sound to indicate that data is being sent or received.

This is convenient because it becomes possible to indicate by sound in a simple manner whether data is being sent or received.

Also, the information input device comprises light emitting means for making current state known by illumination when data is sent or received by touching the display unit with the part of the information input device.

In this way, the information input device may comprise, for example, a plurality of LEDs, and when data is sent or received by touching the display unit of the information terminal with the part of the information input device, the light emitting means can indicate, for example, by turning on the LEDs in sequence, that data is being sent or received.

This is convenient because it becomes possible to indicate visually in a simple manner whether data is being sent or received.

Also, the information terminal comprises visual effect creating means for indicating current state visually when data is sent or received to/from the information input device.

In this way, when data is sent or received to/from the information input device, the information terminal indicates visually--using the visual effect creatingmeans, for example, by animating displayed information--whether data is being sent or received.

This is convenient because it becomes possible to indicate visually in a simple manner whether data is being sent or received.

Also, the information input device is a pen-type input device.

In this way the system may use a pen-type input device as the information input device.

Also, the present invention provides a data communications control server for a data communications control system which comprises an information input device and two or more information terminals and controls data communications between the information terminals according to input information from the information input device, characterized in that:
the data communications control server is connected with the information terminals in such a way as to be ready to communicate;
the data communications control server comprises transmit data storage means for storing the stored-data transmitted from the information terminals, and data transmission means for transmitting, to the information terminal which is a notifying party, memory contents of the transmit data storage means based on a notification, transmitted from the information terminal, about a data transmission request from the information input device.

Also, the data communications control server comprises retrieval key judging means for judging whether a data retrieval key is correct when a notification of a data transmission request which contains the data retrieval key for use to move or copy data stored in the information terminal is received from the information terminal, and transmits the data corresponding to the data transmission request if it is judged that the data retrieval key is correct.

Also, the data communications control server has a storage space of a predetermined capacity for each piece of identification information andholds the data transmitted from the information terminal in the storage space, wherein the identification information is unique to the information input device and is registered with the data communications control server.

Also, the present invention provides an information input device for a data communications control system which comprises the information input device and two or more information terminals and controls data communications between the information terminals according to input information from the information input device, characterized by comprising:
acquisition request transmitting means for transmitting a related-data acquisition request to the information terminal touched with a part of the information input device, related-data storage means for storing related data corresponding to the related-data acquisition request received from the information terminal, data transmission request generating means for generating a data transmission request based on the data stored in the related-data storage means, and data transmission request transmitting means for transmitting the generated data transmission request in the information terminal touched with the part of the information input device to the information terminal.

Also, if the volume of the stored-data corresponding to the related-data acquisition request from the information input device is not larger than a predetermined volume, the information terminal transmits the stored-data directly to the information input device; and
the information input device transmits the acquired stored-data directly to the information terminal at the destination, bypassing the data communications control server.

Also, the data transmission request generating means generates a data transmission request which contains the data retrieval key for use to move or copy data stored in the information terminal.

Also, a security level is assigned to each stored-data item in the information terminal;
the information terminal transmits stored-data with a high security level directly to the information input device; and
the information input device transmits the acquired stored-data directly to the information terminal, bypassing the data transmission control server.

Also, the information input device has unique identification information.

Also, the information input device comprises sound producing means for making current state known by sound when data is sent or received by touching the display unit with the part of the information input device.

Also, the information input device comprises light emitting means for making current state known by illumination when data is sent or received by touching the display unit with the part of the information input device.

Also, the information input device is a pen-type input device.

Also, the present invention provides a data communications control program for controlling a data communications control server in a data communications control system which comprises an information input device and two or more information terminals and controls data communications between the information terminals according to input information from the information input device, the data communications control server being connected with the information terminals in such a way as to be ready to communicate, characterized by comprising:
a transmit data storage step of storing the stored-data transmitted from the information terminals, and a data transmission step of transmitting, to the information terminal which is a notifying party, memory contents of the transmit data storage means based on a notification, transmitted from the information terminal, about a data transmission request from the information input device.

Also, the data communications control program comprises a retrieval key judging step of judging whether a data retrieval key is correct when a notification of a data transmission request which contains the data retrieval key for use to move or copy data stored in the information terminal is received from the information terminal, and the data transmission step transmits the data corresponding to the data transmission request if it is judged that the data retrieval key is correct.

Also, the data communications control server has a storage space of a predetermined capacity for each piece of identification information and the data communications control program comprises a step of holding the data transmitted from the information terminal in the storage space, where the identification information is unique to the information input device and registered with the data communications control server.

Also, the present invention provides an input device control program for controlling an information input device in a data communications control system which comprises the information input device and two ormore information terminals and controls data communications between the information terminals according to input information from the information input device, characterized by comprising:
a related-data acquisition request transmitting step of transmitting a related-data acquisition request to the information terminal touched with a part of the information input device, a related-data storage step of storing related data corresponding to the related-data acquisition request received from the information terminal, a data transmission request generating step of generating a data transmission request based on the related data stored in the related-data storage step, and data transmission request transmitting step of transmitting the generated data transmission request in the information terminal touched with the part of the information input device to the information terminal.

Also, if the volume of the stored-data corresponding to the related-data acquisition request from the information input device is not larger than a predetermined volume, the information terminal transmits the stored-data directly to the information input device; and
the input device control program comprises a direct transmission step of transmitting the acquired stored-data directly to the information terminal at the destination, bypassing the data communications control server.

Also, the data transmission request generating step generates a data transmission request which contains the data retrieval key for use to move or copy data stored in the information terminal.

Also, a security level is assigned to each stored-data item in the information terminal;
the information terminal transmits stored-data with a high security level directly to the information input device; and
the input device control program comprises a direct transmission step of transmitting the acquired stored-data directly to the information terminal.

Also, the input device control program comprises a sound producing step of making current state known by sound when data is sent or received by touching the display unit with the part of the information input device.

Also, the input device control program comprises a light emitting step of making current state known by illumination when data is sent or received by touching the display unit with the part of the information input device.

Also, the present invention provides a terminals control program for controlling information terminals in a data communications control system which comprises an information input device and two or more information terminals and controls data communications between the information terminals according to input information from the information input device, the information terminals being connected with the data communications control server in such a way as to be ready to communicate, characterized by comprising:
a data storage step of storing predetermined data in the information terminals, an information display step of displaying information corresponding to stored-data stored by the data storage step on a display unit, a touch position sensing step of sensing any position on the display unit that is touched with a part of the information input device, a related-data transmitting step of transmitting, to the information input device, related data associated with displayed information at the touch position in response to a related-data acquisition request from the information input device, a stored-data transmitting step of transmitting stored-data corresponding to the displayed information at the touch position to the data communications control server, and a transmission request notifying step of notifying the data communications control server of a data transmission request acquired from the information input device.

Also, the stored-data transmitting step transmits the stored-data directly to the information input device if the volume of the stored-data corresponding to the related-data acquisition request from the information input device is not larger than a predetermined volume.

Also, the related-data transmitting step transmits, as the related data, storage location data which indicates a storage location of the stored-data corresponding to the displayed information.

Also, the related-data transmitting step transmits, as the related data, a data retrieval key for use to move or copy the stored-data corresponding to the displayed information; and
the terminals control program comprises a retrieval key judging step of judging whether the data retrieval key is correct when the data transmission request containing the data retrieval key is received.

Also, the related-data transmitting step transmits, as the related data, a data retrieval key for use to move or copy the stored-data corresponding to the displayed information.

Also, a security level is assigned to each stored-data item in the information terminal; and
the terminals control program comprises a data direct transmission step of transmitting stored-data with a high security level directly to the information input device.

Also, the terminals control program comprises a visual effect creating step of indicating current state visually when data is sent or received to/ from the information input device.

### Brief Description of the Drawings

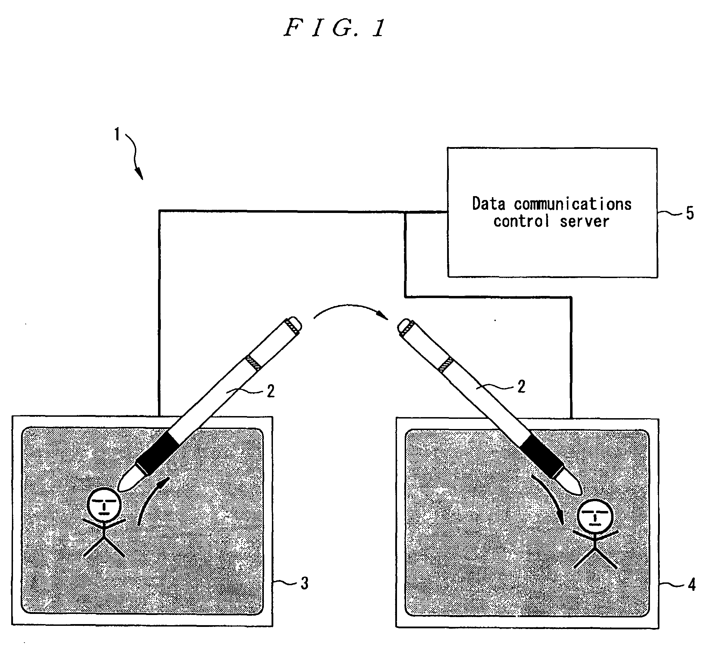

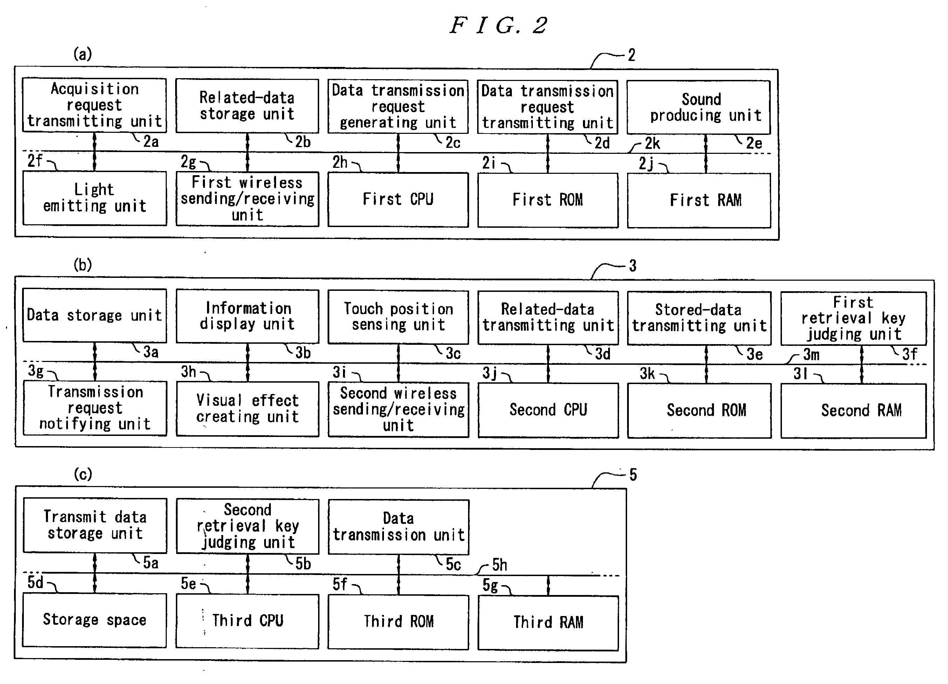

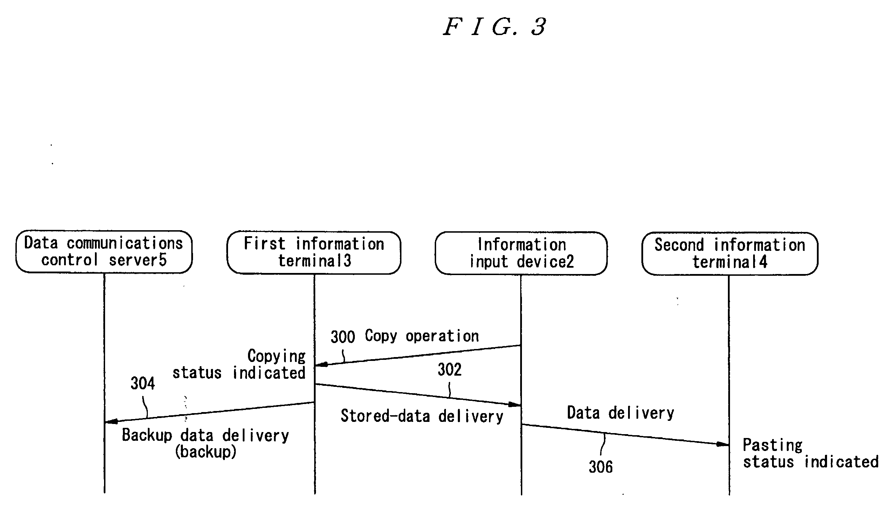

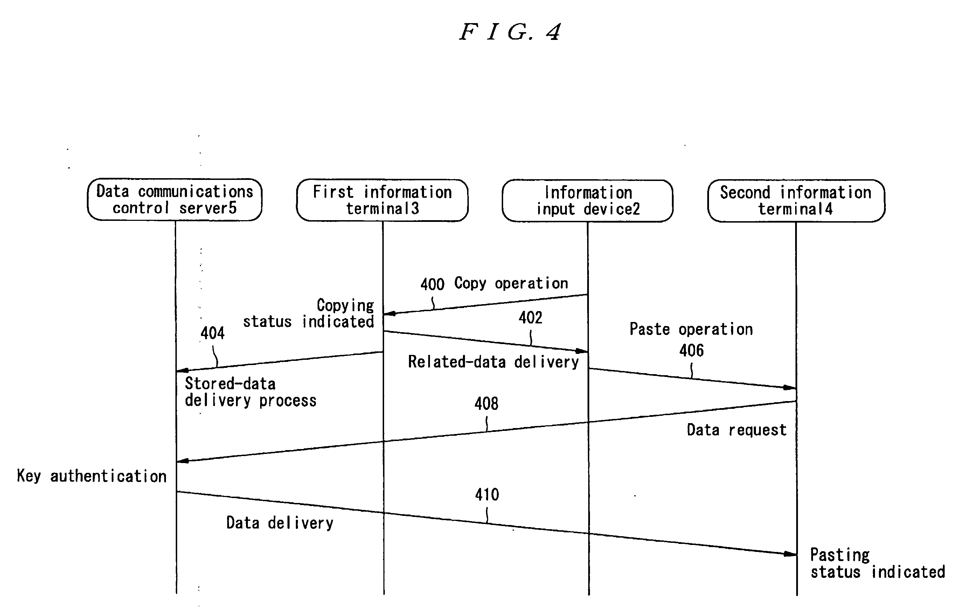

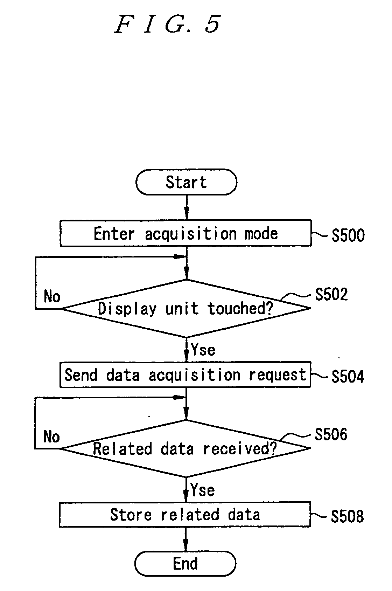

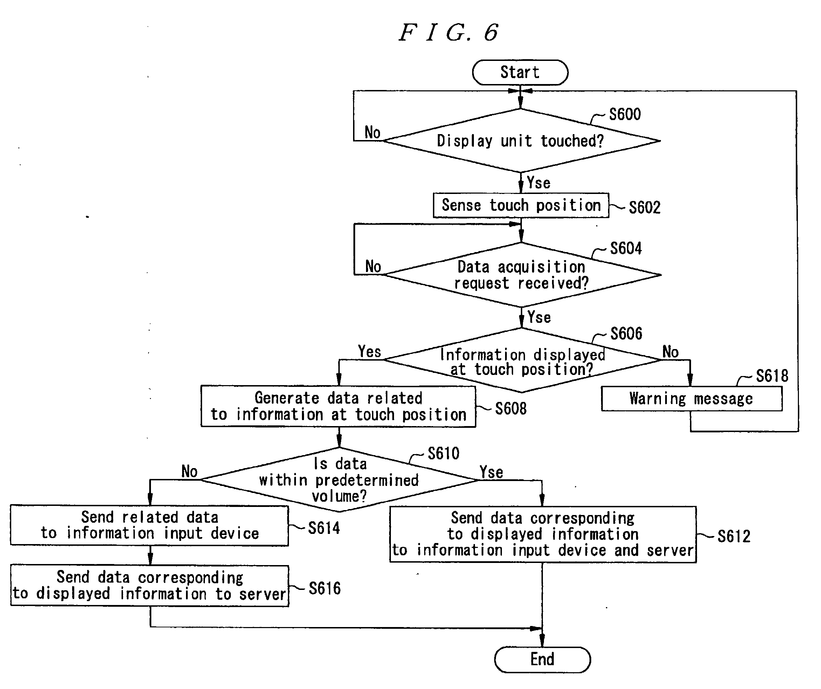

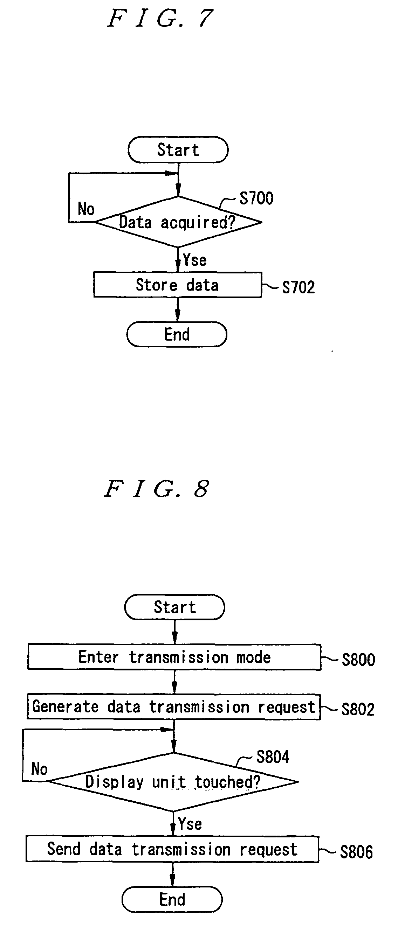

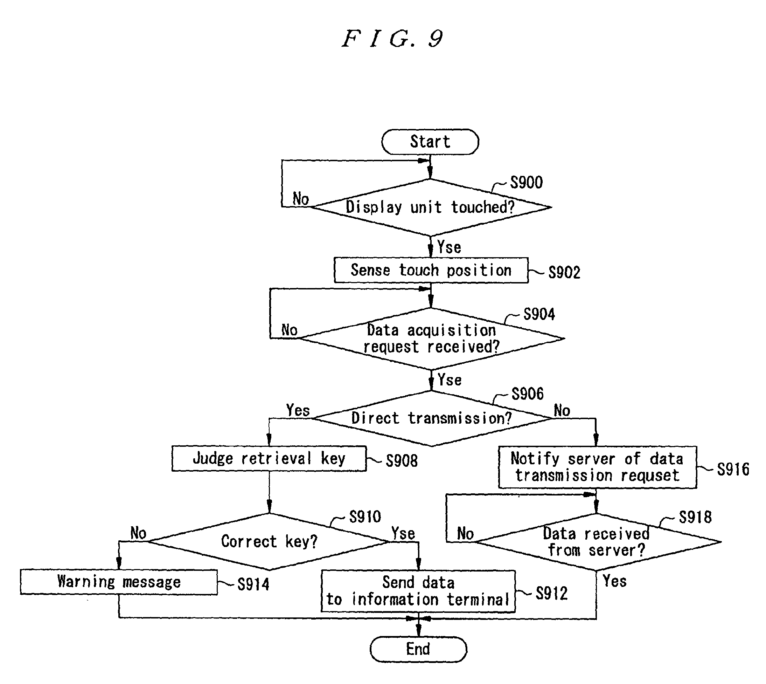

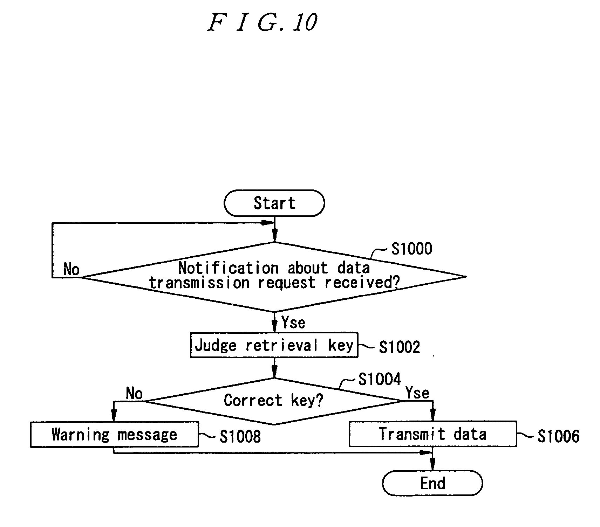

Figure 1 is a block diagram showing a schematic configuration of a data communications control system according to the present invention. Figure 2 (a) is a detailed block diagram of an information input device, Figure 2 (b) is a detailed block diagram of an information terminal, and Figure 2(c) is a detailed block diagram of a data communications control server. Figure 3 is a diagram showing an exemplary sequence for copying data, bypassing a data communications control server 5. Figure 4 is a diagram showing an exemplary sequence for copying data via the data communications control server 5. Figure 5 is a flowchart showing operation processes in a data acquisition mode on an information input device 2. Figure 6 is a flowchart showing operation processes for receiving a related-data acquisition request on a first information terminal 3. Figure 7 is a flowchart showing operation processes for acquiring data on the data communications control server. Figure 8 is a flowchart showing operation processes in a data transmission mode on the information input device 2. Figure 9 is a flowchart showing operation processes for acquiring a data transmission request on a second information terminal 4. Figure 10 is a flowchart showing operation processes for data transmission on the data communications control server 5.

### Best Mode for Carrying Out the Invention

An embodiment of the present invention will be described below with reference to the drawings. Figures 1 to 10 are diagrams showing an embodiment of adata communications control system according to the present invention.

First, a configuration of the data communications control system according to the present invention will be described with reference to Figures 1 and 2. Figure 1 is a block diagram showing a schematic configuration of the data communications control system according to the present invention, Figure 2 (a) is a detailed block diagram of an information input device, Figure 2(b) is a detailed block diagram of an information terminal, and Figure 2(c) is a detailed block diagram of a data communications control server.

As shown in Figure 1, the data communications control system 1 comprises a pen-type information input device 2, first information terminal 3, second information terminal 4, and data communications control server 5.

Furthermore, as shown in Figure 2(a), the pen-type information input device 2 comprises an acquisition request transmitting unit 2a, related-data storage unit 2b, data transmission request generating unit 2c, data transmission request transmitting unit 2d, sound producing unit 2e, light emitting unit 2f, first wireless sending/receiving unit 2g, first CPU (Central Processing Unit) 2h, first ROM (Read Only Memory) 2i, first RAM (Random Access Memory) 2j, and first bus 2k. Unique identification information has been registered in the first ROM 2i of the information input device 2 at the factory.

Besides, as shown in Figure 2 (b), the first information terminal 3 comprises a data storage unit 3a, information display unit 3b, touch position sensing unit 3c, related-data transmitting unit 3d, stored-data transmitting unit 3e, first retrieval key judging unit 3f, transmission request notifying unit 3g, visual effect creating unit 3h, second wireless sending/receiving unit 3i, second CPU 3j, second ROM 3k, second RAM 31, and second bus 3m.

Besides, as shown in Figure 2 (c), the data communications control server 5 comprises a transmit data storage unit 5a, a second retrieval key judging unit 5b, a data transmission unit 5c, storage spaces 5d, a third CPU 5e, a third ROM 5f, and a third RAM 5g. The storage spaces 5d are provided corresponding to the identification information of the information input device 2 and each registered identification information is assigned a storage space 5d.

Now, concrete functions of the individual components of the information input device 2 will be described.

The acquisition request transmitting unit 2a transmits a related-data acquisition request to an information terminal to acquire predetermined data from the information terminal. According to this embodiment, it performs a transmission process in a specified mode, being triggered by a touch with the tip of the pen-type information input device 2.

The related-data storage unit 2b stores data transmitted from the information terminal in response to the related-data acquisition request. The transmitted data may be data which contains stored-data itself or related data which contains information about the storage location of the stored-data, but does not contain the stored-data. Both data contain an information retrieval key which places restrictions on transmission.

The data transmission request generating unit 2c generates a data transmission request to transmit data corresponding to the acquired related data to another information terminal. The data transmission request contains information extracted from the related data: information retrieval key and information about the storage location of the data.

The data transmission request transmitting unit 2d transmits the generated data transmission request to the information terminal at the destination.

When data is sent or received by touching the display unit of the information terminal with the information input device 2, the sound producing unit 2e makes current state known by sound output. It outputs different sounds depending on whether data is being sent or received.

When data is sent or received by touching the display unit of the information terminal with the information input device 2, the light emitting unit 2f makes current state known by illumination of LEDs. The pen-type information input device 2 is equipped with a plurality of LEDs at its tip and turns on the LEDs in sequence in the direction from the rear to the tip when data is being sent and turns on the LEDs in sequence conversely in the direction from the tip to the rear when data is being received.

The first wireless sending/receiving unit 2g conducts data communications between the information input device 2 and information terminals wirelessly.

The first CPU 2h runs an input device control program which is stored in the first ROM 2i and which controls the processes of the various parts described above.

The first RAM 2j stores data needed to run the input device control program.

The first bus 2k is a data communications channel used to transmit data between the various parts described above.

Next, concrete functions of the individual components of the first information terminal 3 will be described.

The data storage unit 3a is a hard disk or the like which stores predetermined data.

The information display unit 3b displays information about stored-data from the data storage unit 3a on the display unit. It displays icons corresponding to data contents on the display unit. The display unit is constituted of a touch panel.

The touch position sensing unit 3c senses the touch position of an object which touches the display unit. It identifies the information acquired by the information input device, based on this positional information.

The related-data transmitting unit 3d transmits the data corresponding to the sensed positional information to the information input device 2. According to this embodiment, it also generates related data.

The stored-data transmitting unit 3e transmits data corresponding to the displayed information for the positional information to the data communications control server 5.

When data is transmitted directly from the information input device 2, the first retrieval key judging unit 3f judges whether the data retrieval key is correct to determine whether the data can be acquired. The data can be acquired only when it is judged that the data retrieval key is correct, and thus it is determined that the data can be acquired.

The transmission request notifying unit 3g notifies the data communications control server 5 about the contents of a data transmission request received from the information input device 2. According to this embodiment, the notification contains the data retrieval key.

The visual effect creating unit 3h indicates current state visually by animating displayed information when data is sent or received to/from the information input device 2 which touches the display unit.

The second wireless sending/receiving unit 3i sends and receives data to/from the information input device 2 wirelessly.

The second CPU 3j runs a terminals control program which is stored in the second ROM 3k and which controls the processes of the various parts described above.

The second RAM 31 stores data needed to run the terminals control program.

The second bus 3m is a data communications channel used to transmit data between the various parts described above.

According to this embodiment, the configuration of the second information terminal 4 is similar to that of the first information terminal 3, and thus, detailed description thereof will be omitted.

Next, concrete functions of the individual components of the data communications control server 5 will be described.

In response to a related-data acquisition request from the information input device 2, the transmit data storage unit 5a stores data transmitted from an information terminal in a large-capacity storage device (not shown) and backs it up in the storage space 5d.

When data is sent and received via the data communications control server 5, second retrieval key judging unit judges whether the receiving information terminal is qualified to receive data from the sending information terminal. In other words, data is transmitted if the receiving information terminal has an authentic retrieval key.

The data transmission unit 5c transmits appropriate data to the receiving information terminal judged by the second retrieval key judging unit 5b as being qualified.

The storage spaces 5d are provided on the data communications control server 5, corresponding to the identification information unique to the information input device 2, and store transmitted data.

The third CPU 5e runs the terminals control program which is stored in the third ROM 5f and which controls the processes of the various parts described above.

The third RAM 5g stores data needed to run the terminals control program.

A third bus 5h is a data communications channel used to transmit data between the various parts described above.

Next, a general flow of operations on this system will be described with reference to Figures 3 and 4. Figure 3 is a diagram showing an exemplary sequence for copying data, bypassing the data communications control server 5 while Figure 4 is a diagram showing an exemplary sequence for copying data via the data communications control server 5.

First, with reference to Figure 3, description will be given of a general flow of operations for copying data, bypassing the data communications control server 5.

A system user switches to a data acquisition mode using an operation key (not shown) of the information input device 2. As the system user touches desired information on the display unit of the first information terminal 3 with the pen tip, a related-data acquisition request is transmitted wirelessly to the first information terminal 3 to perform a copy operation 300. Upon receiving the related-data acquisition request, the first information terminal 3 senses the touch position of the pen tip and judges whether the volume of the data corresponding to the displayed information at the given position is not larger than a predetermined volume. If it is not larger than the predetermined volume, the first information terminal 3 transmits the data to the information input device 2 and performs a stored-data delivery process 302 during which the displayed information is animated to represent the data transmission for the copy operation. Furthermore, the first information terminal 3 performs abackup data delivery process 304 which consists in transmitting the stored-data to the data communications control server 5 to back it up in the storage space 5d. Besides, the information input device 2 is switched to a data transfer mode and the display unit of the second information terminal 4 is touched with the pen tip to transmit the data acquired from the first information terminal 3 to the second information terminal 4. Consequently, a data transmission request containing the data retrieval key is transmitted to the second information terminal 4, where the data retrieval key is judged. If it is judged that the data is permitted to be transmitted, the information input device 2 transmits the acquired data and the second information terminal 4 performs a data delivery process 306 to receive the data while presenting an animation. Through the sequence of processes 300 to 306, data transmission between the information terminals is achieved without involving the data communications control server 5.

Now, with reference to Figure 4, description will be given of a general flow of operations for copying data via the data communications control server 5.

The system user switches to data acquisition mode using an operation key (not shown) of the information input device 2. As the system user touches desired information on the display unit of the first information terminal 3 with the pen tip, a related-data acquisition request is transmitted wirelessly to the first information terminal 3 to perform a copy operation 400. Upon receiving the related-data acquisition request, the first information terminal 3 senses the touch position of the pen tip and judges whether the volume of the data corresponding to the displayed information at the given position is not larger than a predetermined volume. If it is larger than the predetermined volume, the first information terminal 3 performs a related-data delivery process 402 to transmit related data which contains the storage location of the data, the data retrieval key, etc. to the information input device 2 as well as a stored-data delivery process 404 to transmit the very data corresponding to the displayed information to the data communications control server 5. On the other hand, upon receiving the related data from the first information terminal 3, the information input device 2 generates a data transmission request based on the related data, switches to data transmission mode, and performs a paste operation 406 which consists in transmitting the data transmission request to the second information terminal 4 whose display unit is touched with the pen tip. The second information terminal 4 performs a data requesting process 408 to inform the data communications control server about the contents of the acquired transmission request and the data communications control server 4 judges the data retrieval key contained in the data transmission request. If it is judged that the data is permitted to be transmitted, the data communications control server 5 performs a data delivery process 410 to transmit the data to the second information terminal 4. In this way, through the sequence of processes 400 to 410, data transmission between the information terminals is achieved via the data communications control server 5.

Now, concrete operation processes of information input device 2, information terminals, and the data communications control server 5 in this system will be described with reference to Figures 5 to 10. Figure 5 is a flowchart showing operation processes in the data acquisition mode on the information input device 2, Figure 6 is a flowchart showing operation processes for receiving a related-data acquisition request on the first information terminal 3, Figure 7 is a flowchart showing operation processes for acquiring data on the data communications control server, Figure 8 is a flowchart showing operation processes in the data transmission mode on the information input device 2, Figure 9 is a flowchart showing operation processes for acquiring a data transmission request on the second information terminal 4, Figure 10 is a flowchart showing operation processes for data transmission on the data communications control server 5.

As shown in Figure 5, the operation processes in the data acquisition mode on the information input device 2 begin with Step S500 in which the user switches to the data acquisition mode by operating a key on the information input device 2, and then the flow goes to Step S502.

In Step S502, it is judged whether the pen tip of the information input device 2 touches the display unit of the first information terminal 3. If it is judged that the display unit is touched (Yes), the flow goes to Step S504. Otherwise (No), the information input device 2 waits until a touch is sensed.

In Step S504, the acquisition request transmitting unit 2a processes a related-data acquisition request, and then the flow goes to Step S506. When the related-data acquisition request is transmitted, the sound producing unit 2e outputs a sound indicating data transmission and the light emitting unit 2f turns on the LEDs at the pen tip. In this way, the data transmission status is indicated by the sound and LED illumination. Furthermore, the visual effect creating unit 3h of the first information terminal 3 animates the displayed information pointed to by the pen tip, to indicate the data transmission status.

In Step S506, it is judged whether related data has been received from the first information terminal 3. If it is judged that related data has been received (Yes), the flow goes to Step S508. Otherwise (No), the information input device 2 waits until related data is received. During the reception of the related data again, the sound producing unit 2e and light emitting unit 2f indicates the data reception status by sound and LED illumination. Again, the visual effect creating unit 3h of the first information terminal 3 animates the displayed information pointed to by the pen tip, in such a way that something is sucked into the pen tip to indicate the data reception status.

In Step S508, the related-data storage unit 2b stores the received related data to finish the data acquisition process.

The sequence of processes in Step S500 to Step S508 is performed as the first CPU 2h runs the input device control program stored in the first ROM 2i.

Furthermore, as shown in Figure 6, the operation processing for receiving the related-data acquisition request in the first information terminal 3 goes to Step S600, where the touch position sensing unit 3c judges whether the display unit is touchedby an object. If it is judged that the display unit is touched (Yes), the flow goes to Step S602. Otherwise (No), the first information terminal 3 waits until a touch is sensed.

In Step S602, the touch position sensing unit 3c senses the touch position, and then the flow goes to Step S604.

In Step S604, it is judged whether a related-data acquisition request has been received. If it is judged that a related-data acquisition request has been received (Yes), the flow goes to Step S606. Otherwise (No), the first information terminal 3 waits until a related-data acquisition request is received.

In Step S606, it is judged whether there is displayed information at the touch position. If there is displayed information (Yes), the flow goes to Step S608. Otherwise (No), the flow goes to Step S618.

In Step S608, the related-data transmitting unit 3d generates related data which contains a data retrieval key as well as the storage location of the data associated with the displayed information at the touch position, and then the flow goes to Step S610.

In Step S610, the related-data transmitting unit 3d judges whether the volume of the data corresponding to the displayed information is equal to or smaller than a predetermined volume (e.g., 4 Mbytes). If the volume is equal to or smaller than the predetermined volume (Yes), the flow goes to Step S612. Otherwise (No), the flow goes to Step S614.

In Step S612, the related-data transmitting unit 3d sends the data and related data corresponding to the displayed information directly to the information input device 2 to finish the sequence of processes. When the data is transmitted, the sound producing unit 2e outputs a sound indicating data transmission and the light emitting unit 2f turns on the LEDs at the pen tip. In this way, the data transmission status is indicated by the sound and LED illumination. Furthermore, the visual effect creating unit 3h of the first information terminal 3 animates the displayed information pointed to by the pen tip, in such a way that something is sucked into the pen tip to indicate the data transmission status.

In Step S614, the related-data transmitting unit 3d sends the related data generated in Step S608, and then the flow goes to Step S616.

In Step S616, the stored-data transmitting unit 3e sends the data corresponding to the displayed information to the data communications control server 5 to finish the sequence of processes.

If it is judged in Step S606 that no information is displayed at the touch position, a warning message is presented on the display unit in Step S618, and then the flow goes to Step S600.

The sequence of processes in Step S600 to Step S616 is performed as the second CPU 3j runs the terminals control program stored in the second ROM 3k.

As shown in Figure 7, the operation processes of the data communications control server 5 upon obtaining data begin with Step S700 in which it is judged whether stored-data has been received from the first information terminal 3. If stored-data has been received (Yes), the flow goes to Step S702. Otherwise (No), the data communications control server 5 waits until stored-data is received.

In Step S702, the transmit data storage unit 5a stores the stored-data received from the first information terminal 3 to finish the sequence of processes. The stored-data is stored in the storage space 5d provided on the data communications control server 5 corresponding to the predefined identification information unique to the information input device 2.

The sequence of processes in Step S700 to Step S702 is performed as the third CPU 5e runs the data communications control program stored in the third ROM 5f.

As shown in Figure 8, the operation processes in the data transmission mode on the information input device 2 begin with Step S800 in which the user switches to the data transmission mode by operating a key on the information input device 2, and then the flow goes to Step S802.

In Step S802, the data transmission request generating unit 2c generates a data transmission request based on the stored related data, and then the flow goes to Step S804. If the stored-data has a volume not larger than the predetermined volume and has been received directly by the information input device 2, it is included in the generated data transmission request.

In Step S804, it is judged whether the display unit of the first information terminal 3 is touched by the pen tip of the information input device 2. If it is judged that the display unit is touched (Yes), the flow goes to Step S806. Otherwise (No), the information input device 2 waits until a touch is sensed.

In Step S806, the data transmission request transmitting unit 2d sends the generated data transmission request to the first information terminal 3 to finish the sequence of processes. When the data is transmitted, the sound producing unit 2e outputs a sound indicating data transmission and the light emitting unit 2f turns on the LEDs at the pen tip. In this way, the data transmission status is indicated by the sound and LED illumination. Furthermore, the visual effect creating unit 3h of the first information terminal 3 animates the displayed information pointed to by the pen tip, to indicate the data transmission status.

The sequence of processes in Step S800 to Step S806 is performed as the first CPU 2h runs the input device control program stored in the first ROM 2i.

As shown in Figure 9, the operation processes for acquiring a data transmission request on the second information terminal 4 begin with Step S900 in which the touch position sensing unit 3c judges whether the display unit is touched by an object. If it is judged that the display unit is touched (Yes), the flow goes to Step S902. Otherwise (No), the second information terminal 4 waits until a touch is sensed.

In Step S902, the touch position sensing unit 3c senses the touch position, and then the flow goes to Step S904.

In Step S904, it is judged whether a data transmission request has been received from the information input device 2. If it is judged that a data transmission request has been received (Yes), the flow goes to Step S906. Otherwise (No), the second information terminal 4 waits until a data transmission request is received.

In Step S906, based on the information contained in the data transmission request, it is judged whether the data will be transmitted directly from the information input device 2. If it is judged that the data will be transmitted directly (Yes), the 'flow goes to Step S908. Otherwise (No), the flow goes to Step S916.

In Step S908, the first retrieval key judging unit 3f judges the retrieval key contained in the data transmission request, and then the flow goes to Step S910.

If it is judged in Step S910 that the data retrieval key is a correct key which permits the data to be received (Yes), the flow goes to Step S912. Otherwise (No), the flow goes to Step S914.

In Step S912, the information input device 2 sends the data directly to the second information terminal 4 to finish the sequence of processes.

On the other hand, in Step S914, a warning message is presented on the display unit, and then the processing is finished.

If it is judged in Step S906 that the data will not be transmitted directly from the information input device 2, the flow goes to Step S916 where the server is notified of the acquired data transmission request, and then the flow goes to Step S918.

In Step S918, it is judged whether the data has been received. If it is judged that the data has been received (Yes), the sequence of processes is finished. Otherwise (No), the second information terminal 4 waits until the data is received.

The sequence of processes in Step S900 to Step S918 is performed as the second CPU 3j runs the terminals control program stored in the second ROM 3k.

As shown in Figure 10, the operation processes for data transmission on the data communications control server 5 begin with Step S1000 in which it is judged whether a notification about a data transmission request has been received from the second information terminal 4. If it is judged that a notification has been received (Yes), the flow goes to Step S1002. Otherwise (No), the data communications control server 5 waits until the data transmission request is received.

In Step S1002, the second retrieval key judging unit 5b judges the data retrieval key contained in the data transmission request, and then the flow goes to Step S1004.

If it is judged in Step S1004 that the data retrieval key is a correct key which permits the data to be transmitted (Yes), the flow goes to Step S1006. Otherwise (No), the flow goes to Step S1008.

In Step S1006, the data transmission unit 5c transmits the data corresponding to the data transmission request to the second information terminal 4 to finish the sequence of processes.

On the other hand, in Step S1008, a warning message is presented on the display unit of the second information terminal 4, and then the processing is finished.

The sequence of processes in Step S1000 to Step S1006 is performed as the third CPU 3e runs the data communications control program stored in the third ROM 3f.

As described above, since data canbe communicated between information terminals by touch with the information input device 2, data can be moved or copied handily.

Since data can be transmitted via the data communications control server 5 if the data to be moved or copied exceed a predetermined volume, even a large volume of data can be transmitted easily.

Also, since data not exceeding the predetermined volume is moved by being stored directly in an information terminal, it can be moved or copied quickly, bypassing the data communications control server 5.

Since transmitted data are also stored in the storage space 5d in the data communications control server 5, total loss of data can be avoided even in case of an accident during transmission.

Incidentally, a security level may be assigned to each item of the data stored in the first information terminal 3 and second information terminal 4 according to this embodiment so as to prohibit data with a high security level from being moved or copied or to move the data by storing it directly in the information input device 2 without involving the data communications control server 5.

Thus, by assigning security levels to the data stored in the information terminals and placing restrictions on transmission and copying of the data according to the security levels, it is possible to prevent loss or corruption of important data, and thereby improve the stability of the system.

In Figure 2 (a), the acquisition request transmitting unit 2a corresponds to the acquisition request transmitting means described in Claims 1 and 14; the related-data storage unit 2b corresponds to the related-data storage means described in Claims 1 and 14; the data transmission request generating unit 2c corresponds to the data transmission request generating means described in Claims 1, 14, and 16; the data transmission request transmitting unit 2d corresponds to the data transmission request transmitting means described in Claims 1 and 14; the sound producing unit 2e corresponds to the sound producing means described in Claims 7 and 19; and the light emitting unit 2f corresponds to the light emitting means described in Claims 8 and 20.

Also, in Figure 2 (b), the data storage unit 3a corresponds to the data storage means described in Claim 1; the information display unit 3b corresponds to the information display means described in Claim 1; the touch position sensing unit 3c corresponds to the touch position sensing means described in Claim 1; the related-data transmitting unit 3d corresponds to the related-data transmitting means described in Claim 1; the stored-data transmitting unit 3e corresponds to the stored-data transmitting means described in Claim 1; the transmission request notifying unit 3g corresponds to the transmission request notifying means described in Claim 1; the visual effect creating unit 3h corresponds to the visual effect creating means described in Claim 9.

Also, in Figure 2 (c), the transmit data storage unit 5a corresponds to the transmit data storage means described in Claims 1 and 11; the data transmission unit 5c corresponds to the data transmission means described in Claims 1 and 11; the second retrieval key judging unit 2b corresponds to the retrieval key judging means described in Claim 12.

Incidentally, although the information input device 2 according to the above embodiment is of a pen type, this is not restrictive and an information input device of any shape or type may be used.

Also, although according to the above embodiment, the data to be transmitted is stored in the data communications control server once, and then transmitted to the information terminal at the destination, this is not restrictive. It is also possible to transmit only location information of the data to be transmitted and then transmit the data via the server, or transmit the data directly between information terminals.

Also, although according to the above embodiment, a predetermined volume is used as a criterion for determining whether to bypass the data communications control server 5 and transmit stored-data directly to the information input device 2 and then to the information terminal at the destination, this is not restrictive and the storage capacity of the information input device 2 may alternatively be used as a criterion.

### Industrial Applicability

With the data communications control system according to the present invention, data corresponding to the displayed information touched with a part of the information input device on the display unit of a first information terminal can be transmitted to a second information terminal by touching the display unit of the second information terminal with the part of the information input device. This is convenient because data can be communicated handily between information terminals.

Also, the information terminal transmits the stored-data itself directly to the information input device if the volume of the data corresponding to the related-data acquisition request is not larger than a predetermined volume and the information input device transmits the stored-data directly to the information terminal at the destination, bypassing the data communications control server. This is convenient because small volumes of data can be communicated between information terminals quickly. On the other hand, since data in excess of a predetermined volume is transmitted via the data communications control server, large volumes of data can be transmitted handily.

Also, since the related-data transmitting means transmits, as the related data, location information which indicates what information terminal stores the data corresponding to the acquisition request and in what storage means, the location information can be included in the data transmission request and consequently the data communications control server can know the location of the data easily from the location information. This is convenient when transmitting the data to the information terminal.

Also, related data corresponding to a related-data acquisition request contains a data retrieval key for use to move or copy the stored-data, the retrieval key judging means judges whether the data retrieval key acquired is correct, and the data corresponding to the data transmission request is transmitted to the information terminal if it is judged that the data retrieval key is correct. Thus, by enabling sending and receiving of data only among the information terminals which possess this key, it is possible to place restrictions on information terminals individually. Security can be increased if restrictions are set on the sending and receiving of important data.

Also, when the security level of the data corresponding to a related-data acquisition request is high, the information terminal transmits the data directly to the information input device, which then transmits the data directly to the information terminal at the destination, bypassing the data communications control server. Thus, when the data communications control server is installed, for example, on the Internet, data with a high security level can be moved by being stored directly in the information input device. Then it becomes possible to transmit data securely, preventing data leaks and the like.

Also, the information input device is assigned unique identification information, the identification information is registered with the data communications control server, and a storage space of a predetermined capacity is provided for each piece of the identification information. Then, transmitted data is stored and held in the storage space. This means that the data is backed up, which is convenient because the data can be moved and processed assuredly.

Also, when data is sent or received by touching the display unit of the information terminal with the part of the information input device, the information input device makes the sound producing means and light emitting means output a sound and emit light to indicate that data is being sent or received. This is convenient because it becomes possible to indicate by sound and illumination in a simple manner whether data is being sent or received.

Also, when data is sent or received to/from the information input device, the information terminal indicates visually--using the visual effect creating means, for example, by animating displayed information--whether data is being sent or received. This is convenient because it becomes possible to indicate visually in a simple manner whether data is being sent or received.

## Claims

1. A data communications control system comprises an information input device and two or more information terminals and controls data communications between the information terminals according to input information from the information input device, **characterized in that**:
the information terminals and a data communications control server which controls data communications are connected in such a way that they can communicate with each other;
the information terminals comprise data storage means for storing predetermined data, information display means for displaying information corresponding to stored-data stored by the data storage means on a display unit, touch position sensing means for sensing any position on the display unit that is touched with a part of the information input device, related-data transmitting means for transmitting, to the information input device, related data associated with displayed information at the touch position in response to a related-data acquisition request from the information input device, stored-data transmitting means for transmitting stored-data corresponding to the displayed information at the touch position to the data communications control server, and transmission request notifying means for notifying the data communications control server of a data transmission request acquired from the information input device;
the information input device comprises acquisition request transmitting means for transmitting a related-data acquisition request to the information terminal touched with the part of the information input device, related-data storage means for storing the related data, data transmission request generating means for generating a data transmission request based on the related data, and data transmission request transmitting means for transmitting the generated data transmission request to the information terminal touched with the part of the information input device; and
the data communications control server comprises transmit data storage means for storing the stored-data transmitted by the stored-data transmitting means, and data transmission means for transmitting, to the information terminal which is a notifying party, memory contents of the transmit data storage means based on a notification from the transmission request notifying means.

2. The data communications control system according to claim 1, **characterized in that**:
if the volume of the stored-data corresponding to the related-data acquisition request is not larger than a predetermined volume, the information terminal transmits the stored-data directly to the information input device; and
the information input device transmits the acquired stored-data directly to the information terminal at the destination, bypassing the data communications control server.

3. The data communications control system according to claim 1 or 2, **characterized in that** the related-data transmitting means transmits, as the related data, storage location data which indicates a storage location of the stored-data corresponding to the displayed information.

4. The data communications control system according to any one of claims 1 to 3, **characterized in that**:
the related-data transmitting means transmits, as the related data, a data retrieval key for use to move or copy the stored-data corresponding to the displayed information;
the data transmission request generating means generates a data transmission request which contains the data retrieval key; and
the data communications control system comprises retrieval key judging means for judging whether the data retrieval key is correct when the data transmission request containing the data retrieval key is received, and transmits the data corresponding to the data transmission request to the information terminal if it is judged that the data retrieval key is correct.

5. The data communications control system according to any one of claims 1 to 4, **characterized in that**:
a security level is assigned to each stored-data item in the data storage means;
the information terminal transmits stored-data with a high security level directly to the information input device; and
the information input device transmits the acquired data with the high security level directly to the information terminal at the destination, bypassing the data communications control server.

6. The data communications control system according to any one of claims 1 to 5, **characterized in that**:
the information input device has unique identification information; and
the data communications control server has a storage space of a predetermined capacity for each piece of the identification information registered with the server and holds the transmitted stored-data in the storage space.

7. The data communications control system according to any one of claims 1 to 6, **characterized in that** the information input device comprises sound producing means for making current state known by sound when data is sent or received by touching the display unit with the part of the information input device.

8. The data communications control system according to any one of claims 1 to 7, **characterized in that** the information input device comprises light emitting means for making current state known by illumination when data is sent or received by touching the display unit with the part of the information input device.

9. The data communications control system according to any one of claims 1 to 8, **characterized in that** the information terminal comprises visual effect creating means for indicating current state visually when data is sent or received to/from the information input device.

10. The data communications control system according to any one of claims 1 to 9, **characterized in that** the information input device is a pen-type input device.

11. A data communications control server for controlling data communications in a data communications control system comprises an information input device and two or more information terminals and controls data communications between the information terminals according to input information from the information input device, **characterized in that**:
the data communications control server is connected with the information terminals in such a way as to be ready to communicate;
the data communications control server comprises transmit data storage means for storing the stored-data transmitted from the information terminals, and data transmission means for transmitting, to the information terminal which is a notifying party, memory contents of the transmit data storage means based on a notification, transmitted from the information terminal, about a data transmission request from the information input device.

12. The data communications control server according to claim 11, **characterized in that** the data communications control server comprises retrieval key judging means for judging whether a data retrieval key is correct when a notification of a data transmission request which contains the data retrieval key for use to move or copy data stored in the information terminal is received from the information terminal, and transmits the data corresponding to the data transmission request if it is judged that the data retrieval key is correct.

13. The data communications control server according to claim 11 or 12, **characterized in that** the data communications control server has a storage space of a predetermined capacity for each piece of identification information and holds the data transmitted from the information terminal in the storage space, wherein the identification information is unique to the information input device and is registered with the data communications control server.

14. An information input device for a data communications control system comprises the information input device and two or more information terminals and controls data communications between the information terminals according to input information from the information input device, **characterized by** comprising:
acquisition request transmitting means for transmitting a related-data acquisition request to the information terminal touched with a part of the information input device, related-data storage means for storing related data corresponding to the related-data acquisition request received from the information terminal, data transmission request generating means for generating a data transmission request based on the related data stored in the related-data storage means, and data transmission request transmitting means for transmitting the generated data transmission request in the information terminal touched with the part of the information input device to the information terminal.

15. The information input device according to claim 14, **characterized in that**:
if the volume of the stored-data corresponding to the related-data acquisition request from the information input device is not larger than a predetermined volume, the information terminal transmits the stored-data directly to the information input device; and
the information input device transmits the acquired stored-data directly to the information terminal at the destination, bypassing the data communications control server.

16. The information input device according to claim 14 or 15, **characterized in that** the data transmission request generating means generates a data transmission request which contains the data retrieval key for use to move or copy data stored in the information terminal.

17. The information input device according to any one of claims 14 to 15, **characterized in that**:
a security level is assigned to each stored-data item in the information terminal;
the information terminal transmits stored-data with a high security level directly to the information input device; and
the information input device transmits the acquired stored-data directly to the information terminal, bypassing the data transmission control server.

18. The information input device according to any one of claims 14 to 17, **characterized by** having unique identification information.

19. The information input device according to any one of claims 14 to 18, **characterized by** comprising sound producing means for making current state known by sound when data is sent or received by touching the display unit with the part of the information input device.

20. The information input device according to anyone of claims 14 to 19, **characterized by** comprising light emitting means for making current state known by illumination when data is sent or received by touching the display unit with the part of the information input device.

21. The information input device according to anyone of claims 14 to 19, **characterized by** being a pen-type input device.

22. A data communications control program for controlling a data communications control server in a data communications control system comprises an information input device and two ormore information terminals and controls data communications between the information terminals according to input information from the information input device, the data communications control server being connected with the information terminals in such a way as to be ready to communicate, **characterized by** comprising:
a transmit data storage step of storing the stored-data transmitted from the information terminals, and a data transmission step of transmitting, to the information terminal which is a notifying party, memory contents of the transmit data storage means based on a notification, transmitted from the information terminal, about a data transmission request from the information input device.

23. The data communications control program according to claim 22, **characterized in that** the data communications control program comprises a retrieval key judging step of judging whether a data retrieval key is correct when a notification of a data transmission request which contains the data retrieval key for use to move or copy data stored in the information terminal is received from the information terminal, and the data transmission step transmits the data corresponding to the data transmission request if it is judged that the data retrieval key is correct.

24. The data communications control program according to claim 22 or 23, **characterized in that** the data communications control server has a storage space of a predetermined capacity for each piece of identification information and the data communications control program comprises a step of holding the data transmitted from the information terminal in the storage space, where the identification information is unique to the information input device and registered with the data communications control server.

25. An input device control program for controlling the information input device in a data communications control system comprises an information input device and two or more information terminals and controls data communications between the information terminals according to input information from the information input device, **characterized by** comprising:
a related-data acquisition request transmitting step of transmitting a related-data acquisition request to the information terminal touched with a part of the information input device, a related-data storage step of storing related data corresponding to the related-data acquisition request received from the information terminal, a data transmission request generating step of generating a data transmission request based on the related data stored in the related-data storage step, and data transmission request transmitting step of transmitting the generated data transmission request in the information terminal touched with the part of the information input device to the information terminal.

26. The information input device according to claim 25, **characterized in that**:
if the volume of the stored-data corresponding to the related-data acquisition request from the information input device is not larger than a predetermined volume, the information terminal transmits the stored-data directly to the information input device; and
the input device control program comprises a direct transmission step of transmitting the acquired stored-data directly to the information terminal at the destination, bypassing the data communications control server.

27. The input device control program according to claim 25 or 26, **characterized in that** the data transmission request generating step generates a data transmission request which contains the data retrieval key for use to move or copy data stored in the information terminal.

28. The input device control program according to any one of claims 25 to 27 **characterized in that**:
a security level is assigned to each stored-data item in the information terminal;
the information terminal transmits stored-data with a high security level directly to the information input device; and
the input device control program comprises a direct transmission step of transmitting the acquired stored-data directly to the information terminal.

29. The input device control program according to any one of claims 25 to 28 **characterized by** comprising a sound producing step of making current state known by sound when data is sent or received by touching the display unit with the part of the information input device.

30. The input device control program according to any one of claims 25 to 29 **characterized by** comprising a light emitting step of making current state known by illumination when data is sent or received by touching the display unit with the part of the information input device.

31. A terminals control program for controlling information terminals in a data communications control system comprises an information input device and two or more information terminals and controls data communications between the information terminals according to input information from the information input device, the information terminals being connected with the data communications control server in such a way as to be ready to communicate, **characterized by** comprising:
a data storage step of storing predetermined data in the information terminals, an information display step of displaying information corresponding to stored-data stored by the data storage step on a display unit, a touch position sensing step of sensing any position on the display unit that is touched with a part of the information input device, a related-data transmitting step of transmitting, to the information input device, related data associated with displayed information at the touch position in response to a related-data acquisition request from the information input device, a stored-data transmitting step of transmitting stored-data corresponding to the displayed information at the touch position to the data communications control server, and a transmission request notifying step of notifying the data communications control server of a data transmission request acquired from the information input device.

32. The terminals control program according to claim 31, **characterized in that** the stored-data transmitting step transmits the stored-data directly to the information input device if the volume of the stored-data corresponding to the related-data acquisition request from the information input device is not larger than a predetermined volume.

33. The terminals control program according to claim 31 or 32, **characterized in that** the related-data transmitting step transmits, as the related data, storage location data which indicates a storage location of the stored-data corresponding to the displayed information.

34. The data communications control system according to any one of claims 31 to 33, **characterized in that**:
the related-data transmitting step transmits, as the related data, a data retrieval key for use to move or copy the stored-data corresponding to the displayed information; and
the terminals control program comprises a retrieval key judging step of judging whether the data retrieval key is correct when the data transmission request containing the data retrieval key is received.

35. The terminals control program according to any one of claims 31 to 34, **characterized in that** the related-data transmitting step transmits, as the related data, a data retrieval key for use to move or copy the stored-data corresponding to the displayed information.

36. The terminals control program according to any one of claims 31 to 35, **characterized in that**:
a security level is assigned to each stored-data item in the information terminal; and
the terminals control program comprises a data direct transmission step of transmitting stored-data with a high security level directly to the information input device.

37. The terminals control program according to any one of claims 31 to 36, **characterized in that** the terminals control program comprises a visual effect creating step of indicating current state visually when data is sent or received to/from the information input device.
